# EUROPEAN PATENT APPLICATION

(11) **EP 4 851 317 A1**
(43) Date of publication of application: **09.12.2026**
(21) Application number: 25181073.5
(22) Date of filing: 05.06.2025
(51) Int. Cl.: C22C 1/02, B22F 10/00, B33Y 70/00, B33Y 80/00, C22C 1/04, C22C 19/05

(54) **HIGHLY OXIDATION RESISTANT NICKEL (NI) BASE SUPERALLOY**

(71) Applicant: Siemens Energy Global GmbH & Co. KG, 81739 München (DE)
(72) Inventor: Hasselqvist, Magnus, 61213 Finspång (SE)

(57) **Abstract**

The present invention relates to a nickel-based gamma prime strengthened superalloy having a blend of excellent oxidation resistance, moderate corrosion resistance, very high creep resistance and good processability. It is intended for, but not limited to, precision casting such as conventional casting, directional solidification and single crystal casting. It is intended for, but not limited to, components such as vanes and rotating blades used in the hot stages of land based high performance gas turbines. The present invention comprises between 9 and 11 wt% Cr, between 6 and 10 wt% Co, between 6 and 10 wt% Fe, between 0.5 and 2 wt% Mo, between 2 and 4 wt% W, between 5 and 6 wt% Al, between 7 and 11 wt% Ta, between 0.05 and 1.5 wt% Hf, between 0.005 and 0.5 wt% Si, between 0.005 and 0.1 wt% C, up to 0.03 wt% B, up to 0.03 wt% Zr, up to 0.1 wt% of the sum of Y, Sc, the Lanthanides and the Actinides, the remainder being Ni and unavoidable impurities.

## Description

The present invention relates to a Nickel base gamma prime strengthened superalloy having a blend of excellent oxidation resistance, moderate corrosion resistance, very high creep resistance, high phase stability and good processability.

It is intended for, but not limited to, precision casting such as conventional casting, directional solidification and single crystal casting. It is intended for, but not limited to, components such as vanes and rotating blades used in the hot stages of land based high performance gas turbines.

### Background

Prior to the introduction of the F class gas turbines in about 1995, hot stage stator parts and rotating blades in land based gas turbines were typically made in alloys such as the conventionally cast IN738LC, IN792 and GTD-111, see Table 1. These provide high or very high corrosion resistance thanks to at least 12wt% Cr and at most 2wt% Mo, see [Goldschmidt], an unfortunately at most moderate oxidation resistance due to an inability to form protective alumina, see [Barett], an unfortunately at most moderate coating compatibility due to at most moderate Al levels and too high Ti levels, see [Wu], and moderate (IN738LC) to high (IN792 and GTD-111) creep strength.

The increased Turbine Inlet Temperatures (TIT) in the F class, and subsequent upgrades, forced designers to gradually turn to Aero alloys such as the conventionally cast CM247CC and the single crystal cast CMSX-4 and Rene N5 to utilize their higher oxidation resistance and coating compatibility, see Table 1. Thanks to their higher levels of Al and lower Ti levels their Al activities are high enough to enable formation of protective alumina and improved coating lives. Firstly, with higher Al activities they do not drain away Al from the coating via diffusion as fast as alloys such as IN738LC, GTD-111 and IN792. Secondly, their lower Ti levels implies less diffusion of Ti into the coatings, and Ti tends to be detrimental to said coatings, see [Wu].

Their corrosion resistance is unfortunately low (CM247CC) or very low (CMSX-4 and Rene N5) due to their low (8.0wt% in CM247CC) or very low (6.4wt% in CMSX-4 and 7.0wt% in Rene N5) levels of Cr.

Their gamma prime contents, taken at 850°C, are very high (about 65mol% in CM247CC) or extremely high (about 70mol% in CMSX-4 and Rene N5). Hence their heat treatment windows are small, and consequently it is difficult to dissolve all as-cast eutectics, especially for large blades in land based gas turbines. Furthermore, the residual segregation of alloy elements will be significant.

Aero alloys are typically designed to maximize the metal temperature corresponding to creep rupture after between 100 and 1000h at a stress of 137MPa as seen in 'temperature capability' diagrams. Typical temperatures for modern SX alloys are about 1323K (1050°C). Their microstructures tend to degrade with time under land base gas turbine conditions, i.e. at least 30kh between major inspections in creep load carrying areas working at about 1123K (850°C). Thanks to their very high gamma prime levels, and for CMSX-4 and Rene N5 also Re additions and SX casting, and, despite said long term degradation, they provide high (CM247CC) or very high (CMSX-4 and Rene N5) creep strength also under land based gas turbine conditions.

The low corrosion resistance of alloys like CM247CC is often handled by high quality filters and tight fuel specification, but corrosion remains an issue at e.g. corrosive sites close to the sea or within industrial areas. It furthermore restricts the choice of fuels, natural gas containing any H2S as well as corrosive biofuels are usually avoided.

The very low corrosion resistance of alloys like CMSX-4 and Rene N5 sometimes prompt the use of internal coatings. This is expensive and parts can be vulnerable to quality issues since corrosion resistant coatings tend to be brittle at the best of times. Even tighter fuel and filter specifications are sometimes used. Corrosion related issues are nevertheless difficult to fully suppress for these very low contents of Cr.

One response has been the development of the conventionally cast STAL125CC1, and the single crystal cast STAL15SX and STAL125SX1, see Table 1. STAL15SX was designed to combine IN738LC level corrosion resistance with CMSX-4 level oxidation resistance and does so. STAL125CC1 and STAL125SX1 were designed to combine IN792 level corrosion resistance with CMSX-4 level oxidation resistance and do so.

STAL125CC1, which contains about 55mol% gamma prime, provides CM247CC level creep strength despite less gamma prime and thanks to a larger heat treatment window which enables (a) elimination of all eutectics and (b) a low residual segregation, leading to a more stable longer term behavior. Similarly, STAL125SX1 contains about 55mol% gamma prime and provides more stable long term behavior than CMSX-4 and Rene N5 resulting in similar creep strength under land based gas turbine conditions.

The TIT levels continued to increase while the allowable use of cooling air was reduced. This was done to enable improved thermal efficiency, consistent with a need to reduce CO2 emissions. Eventually the oxidation resistance and coating compatibility provided by alloys such as CM247CC, CMSX-4, Rene N5 and the STAL alloys were no longer always sufficient.

A recent response has been the development of Edge15 and Edge125 for conventional casting, and, in the case of Edge15 also for additive manufacturing via e.g. LMD and LPBD, as derivatives of the STAL alloys, see Table 1. Fe was added, eventually at levels of 6.0wt% to 10.0wt%, based on the notion that Fe seemed to improve the oxidation resistance in Al2O3 forming alloys such as Haynes214 and other Haynes alloys.

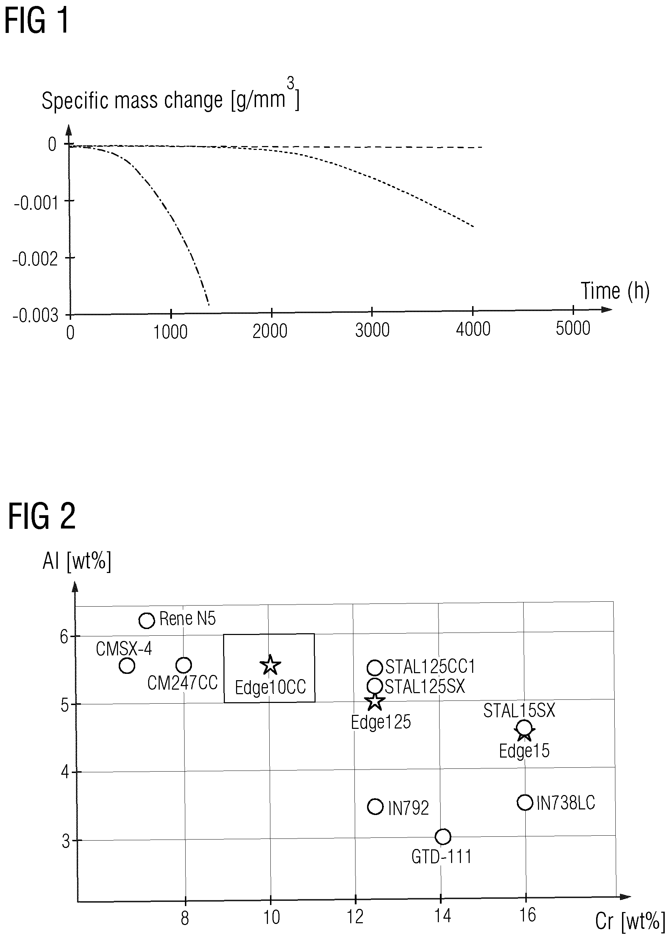

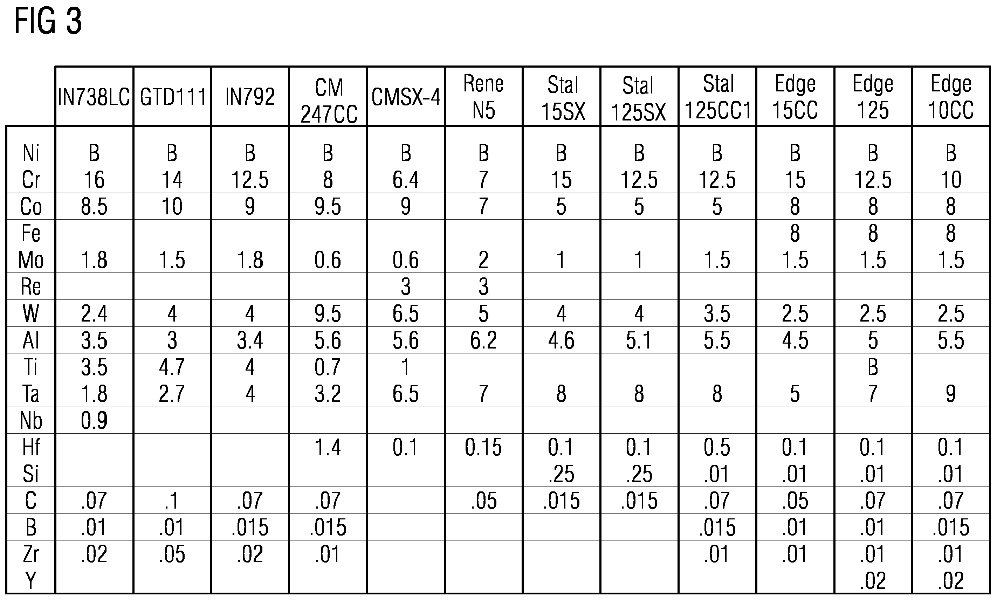

Figure 1 shows the test results for Edge15 under cyclic oxidation with > 4000h of accumulated hold time at 1473K (1200°C). The test was then stopped since 'nothing seemed to happen' as evidenced by the flat material change curve. This has to be regarded as an excellent test result. The Edge15 specimen was Low Sulfur processed and included Y. More information about the effect of Sulfur (S) and how it can be suppressed is provided in the section in which the present invention is described.

This excellent oxidation resistance in Edge15 may at first seem surprising based on its moderate Al content (4.5wt%). It can however be rationalized on the basis of the exceptionally high Al activity. The Al activity at 1273K (1000°C) of Edge15 is almost twice as high as that of STAL15SX and STAL125CC1, see Table 1.

The combination of Fe and Co in the Edge alloys changes the partitioning of Al, forcing more Al into the gamma matrix. Hence an Edge alloy provides less creep strength than a STAL alloy, for given levels of other alloy elements, since their gamma prime levels are reduced (although the increased Al content in the gamma matrix does seem to add some solution strengthening). The gamma prime contents of Edge15 and Edge125 are about 35mol% and 45mol% respectively. It can be noted that it is the moderate gamma prime content in Edge15 which enables its use for additive manufacturing.

### The problem to be solved by the present invention

It was recognized that Edge15 and Edge125 can be used for heat shields and at most moderately creep loaded vanes. It was further recognized that SX casting of a suitably modified Edge125 might provide creep strength on the STAL15SX level which is sufficient for many but not all rotating blades. It was however also recognized that there was a need for an SX alloy providing STAL125SX level creep strength and at least Edge15 level oxidation resistance to be used for rotating blades, and, that there was also a need for a CC alloy providing STAL125CC1 level creep strength and at least Edge15 level oxidation resistance for more highly loaded vanes.

It was furthermore recognized that this would likely require gamma prime contents on about the same level as in STAL125CC1 and STAL125SX1, i.e. at about 55mol%, a similar level of strengthening elements, in particular of the main strengthening element Ta, and a heat treatment window which enables full solutioning of all eutectics and a low residual segregation. It was furthermore recognized that this would unfortunately require a reduction in Cr content relative to Edge125, but, that Cr contents as low as on the CM247CC level probably could and thus should be avoided.

Table 1 and figure 2 list up nominal compositions of some alloys referred to in this text, alloy elements are given in wt%..

### Description of the invention

Edge10CC can be seen as a scaling of Edge125, see Table 1. Cr is reduced from 12.5wt% to 10wt%, Al is increased from 5wt% to 5.5wt% and Ta is increased from 7.0wt% to 9.0wt%. The main composition (in wt%) of Edge10CC is Ni-10Cr-8Co-8Fe-1.5Mo-2.5W-5.5Al-9Ta-0.1Hf-0.01Si-0.07C-0.015B-0.01Zr-0.02Y. The gamma prime content increases from about 45mol% to about 55mol%, the concentration of Mo+W in the gamma matrix increases, and the concentration of Ta in the gamma prime also increases.

Edge10CC addresses the need for a new conventionally cast alloy with a creep strength similar to that of STAL125CC1. While the Cr content, and thus the corrosion resistance, is now below that in alloys such as STAL125SX1, STAL125CC1 and Edge125, all of which include 12.5wt% Cr, it is nevertheless higher than in alloys such as CM247CC (8.0wt%) and still higher than in alloys such as CMSX-4 (6.4wt%) and Rene N5 (7 wt%). This reduction in corrosion resistance will result in higher costs in terms of filters and fuel specifications, and impose some restrictions on plant placements, compared to the use of alloys such as STAL125SX1, STAL125CC1 and Edge125, but said costs and restrictions will be less severe than for alloys such as CM247CC, CMSX-4 and Rene N5.

The Al activity of Edge10CC is estimated to be 9.8E-8 at 1273K (1000°C). This is higher than for Edge15 (7.6E-8) and Edge125 (8.4E-8), and significantly higher than for STAL15SX (4.3E-8) which has shown oxidation resistance and coating compatibility similar to the well-known CMSX-4 in lab tests as well as in gas turbine rainbow tests in service. This is of interest since CMSX-4 can be viewed as a modern norm for high oxidation resistance and coating compatibility.

The Heat Treatment Window (HTW) is the interval between the gamma prime Solvus and the Solidus temperatures. For the STAL and Edge alloys the Solidus temperature is about 1573K (1300°C). The gamma prime Solvus temperatures for Edge15, Edge125 and Edge10CC, as estimated by ThermoCalc/TTNi8, are about 1343K (1070°C), 1393K (1120°C) and 1443K (1170°C) respectively, hence Edge10CC has a very large HTW of about 130K. This will enable full solutioning of as-cast eutectics and result in a small residual segregation.

The phase stability of STAL and Edge alloys as above can be pragmatically evaluated based on the sum of Unwanted Phases (UP), such as Laves and Sigma, predicted at 973K (700°C). The finding was that "if this predicted level was below about 3.5mol% for the nominal composition, the amount of UP precipitation seen in creep tests in the critical 1023K (750°C) to 1223K (950°C) range would be insignificant, included for deviations within realistic alloy specifications". This criterium was formulated on the basis of creep tests on trial alloys used in the design of STAL15SX and has been confirmed by creep tests on trial alloys of other STAL and Edge alloys. The predicted UP levels at 973K (700°C) for STAL15SX, Edge15, Edge125 and Edge10CC are 3.4mol%, 3.2mol%, 2.9mol% and 3.0mol% respectively.

Hence Edge10CC is e.g. more stable according to this criterium than STAL15SX which has shown a very good phase stability in creep tests as well as in service.

If Edge10CC is seen as a CC embodiment of the present invention, an SX embodiment can be obtained via a reduction in grain boundary elements combined with other suitable adjustments. The Si content, which is low in Edge10CC to avoid detrimental effects on the grain boundary strength, can be increased, as done during e.g. the development of STAL15SX where the Si addition improved the TMF resistance, see [Moverare]. Edge10CC can furthermore be modified to facilitate Directional Solidification via increased levels of Hf. It can furthermore be modified to enable improved Low Angle Boundary tolerance for casting of large SX blades via a partial retention of the grain boundary element in Edge10CC.

The present invention comprises (in wt%): between 9.0% and 11.0% Chromium (Cr), between 6.0% and 10.0% Cobalt (Co), between 6.0% and 10.0% Iron (Fe), between 0.5% and 2.0% Molybdenum (Mo), between 2 and 4% Tungsten (W), between 5 and 6% Aluminum (Al), between 7.0% and 11.0% Tantalum (Ta), between 0.05wt% and 1.5% Hafnium (Hf), between 0.005% and 0.5% Silicon (Si), between 0.005% and 0.1% Carbon (C), up to 0.03% Boron (B), up to 0.03% Zirconium (Zr), up to 0.1% of the sum of Yttrium (Y), Scandium (Sc), the Lanthanides and the Actinides, with the remainder being Nickel (Ni) and unavoidable impurities.

At least 9.0wt% Cr is included to provide a margin in corrosion resistance relative to alloys such as CM247CC. The Cr content is capped at 11.0wt% since a higher level is not seen as consistent with a high resistance to UP formation.

At least 6.0wt% Co + 6.0wt% Fe provides a significant boost to the Al activity. The Co and Fe contents are capped at 10.0wt% since higher levels are not seen as consistent with a high resistance to UP formation.

At least 0.5wt% Mo is included to strengthen the gamma matrix. The Mo content is capped at 2.0wt% since a higher level could increase the risk for hot corrosion, see [Goldschmidt].

At least 2.0wt% W is included to strengthen the gamma matrix. The W content is capped at 4.0wt% since a higher level is not seen as consistent with a high resistance to UP formation.

At least 5.0wt% Al is included to enable a high Al activity and a high gamma prime content. The Al content is capped at 6.0wt% since a higher level is not seen as consistent with a high resistance to UP formation.

At least 7.0wt% Ta is included to provide significant strengthening of the gamma prime particles and to support a high Al activity. Ta is also known to be preferable to other strengthening elements in terms of processability. The Ta content is capped at 11.0wt% since a higher level is not seen as consistent with a high resistance to UP formation.

The present invention provides excellent oxidation resistance if the Sulfur effect is well suppressed, either via a Low Sulfur (LS) process (<5ppmw S) combined with a Reactive Element (RE) recipe containing on or more rare earths from the group of Y, Sc the Lanthanides and the Actinides, or an Ultra Low Sulfur (ULS) process (<1ppmw S) and a less elaborate RE recipe which does not contain a rare earth.

It should be added that in STAL15SX the use of ULS has been shown to be somewhat beneficial compared to the initial use of LS combined with Ce, but the difference has been small.

At least 0.05wt% Hf is included to enable Hf to be part of a recipe for Sulfur effect suppression. Up to 1.5wt% can be used to enable Directional Solidification without hot tearing. Higher levels might reduce the HTW too much and thus lead to retained eutectics and higher levels of retained segregation. Hence Hf is capped at 1.5wt%.

At least 0.005wt% Si is included since Si has a beneficial catalytic effect on formation of protective Cr2O3 and Al2O3 as noted in [Hasselqvist]. While Si can have a detrimental effect on the grain boundary strength at anything but very small levels in CC alloys, it can be used at higher levels in SX alloys. It is capped at 0.5wt% since a higher level is not seen as consistent with a high resistance to UP formation and might reduce the Heat Treatment Window too much.

At least 0.005wt% C is included even for SX embodiments, consistent with the inclusion of 0.015wt% C in STAL15SX and STAL125SX, see Table 1. It is capped at 0.1wt% since a higher level is regarded as detrimental to the TMF resistance in CC and DS embodiments.

Up to 0.03wt% B is included to strengthen grain boundaries in CC and DS embodiments, and to strengthen Low Angle Boundaries in SX embodiments. It is capped at 0.03wt% since a higher level is seen as detrimental to processability.

Up to 0.03wt% Zr is included for strengthening of grain boundaries in CC and DS embodiments, and of Low Angle Boundaries in SX embodiments. If present it is furthermore part of the Sulfur effect suppression recipe. It is capped at 0.03wt% since a higher level is regarded as detrimental to the processability.

Up to 0.1wt% of the sum of Y, Sc, the Lanthanides and the Actinides is included to suppress the detrimental Sulfur effect. While Ce, La and Y are the most common rare earths in oxidation resistant alloys, all these rare earths share the same 'find, bind and neutralize Sulfur' ability. The use of 'sum off' rather than a restriction to a specific rare earth element enables the use of commercial MichMetal, which is such a rare earth mix. The sum above is capped at 0.1wt% to suppress incipient melting during solutioning.

A possible SX embodiment with a composition, in wt%, of Ni-10Cr-8Co-8Fe-1.5Mo-2.5W-5.4Al-8.6Ta-0.1Hf-0.1Si-0.015C-0.02Y can be derived from Edge10CC. The reduction in C and the increased Si content would have increased the tendency for UP formation if the Al and Ta contents had not been somewhat reduced. The Al activity is kept very similar despite the reduction in Al and Ta since (a) the adjustments are small and (b) Si in itself has a beneficial effect.

Another possible SX embodiment with a composition (in wt%) of Ni-10Cr-8Co-8Fe-1.5Mo-2.5W-5.4Al-8.6Ta-0.1Hf-0.1Si-0.03C-0.05B-0.01Zr is aimed at, but not restricted to, casting of large hot stage SX blades. Large blades tend to be more susceptible to LAB formation, which is why B and Zr have been reintroduced. Since it is difficult to control the content of rare earths like Y when large blades are cast, the use of Y for sulfur effect suppression has been replaced by the reintroduction of Zr and a requirement on Ultra Low Sulfur (<1ppmw) processing. Another possibility is to moderately reduce the levels of various elements relative to Edge10CC to enable an increased Hf content to enable DS casting, resulting in a composition (in wt%) of Ni-9.5Cr-8Co-8Fe-1.5Mo-2.5W-5.2Al-8.6Ta-1.4Hf-0.01Si-0.07C-0.015B-0.01Zr.

It should also be mentioned that STAL15SX is used in two versions sharing the same Design Data: With LS processing and an addition of the rare earth Ce, and with ULS processing without a rare earth addition. The choice is normally up to the casting vendor based on its particular expertise. This possibility will be used also for the present invention.

The area in the CrAl plane covered by the present invention is provided in Figure 2.

Preferred examples are:
Nickel base alloy comprising (in wt%) 7.0% to 9.0% Cobalt (Co), 7.0% to 9.0% Iron (Fe), 1.2% to 1.8% Molybdenum (Mo), 2.2% to 2.8% Tungsten (W), 9.5% to 10.5% Chromium (Cr), 5.2% to 5.7% Aluminum (Al), 8.0% to 10.0% Tantalum (Ta), 0.05% to 0.15% Hafnium (Hf), 0.005% to 0.15% Silicon (Si), 0.02% to 0.1% Carbon (C), 0.005 to 0.03% Zirconium (Zr), 0.005 to 0.02% Boron (B).

Nickel base alloy comprising (in wt%) 8.0% Cobalt (Co), 8.0% Iron (Fe), 1.5% Molybdenum (Mo), 2.5% Tungsten (W), 10.0% Chromium (Cr), 5.5% Aluminum (Al), 9.0% Tantalum (Ta), 0.1% Hafnium (Hf), 0.01% Silicon (Si), 0.07% Carbon (C), 0.01% Zirconium (Zr), 0.015% Boron (B).

Nickel base alloy comprising (in wt%) 8.0% Cobalt (Co), 8.0% Iron (Fe), 1.5% Molybdenum (Mo), 2.5% Tungsten (W), 10.0% Chromium (Cr), 5.4% Aluminum (Al), 8.6% Tantalum (Ta), 0.1% Hafnium (Hf), 0.1% Silicon (Si), 0.03% Carbon (C), 0.01% Zirconium (Zr), 0.005% Boron (B).

Nickel base alloy comprising (in wt%) 7.0% to 9.0% Cobalt (Co), 7.0% to 9.0% Iron (Fe), 1.2% to 1.8% Molybdenum (Mo), 2.2% to 2.8% Tungsten (W), 9.5% to 10.5% Chromium (Cr), 5.2% to 5.7% Aluminum (Al), 8.0% to 10.0% Tantalum (Ta), 0.05% to 0.15% Hafnium (Hf), 0.05% to 0.5% Silicon (Si), 0.005% to 0.03% Carbon (C).

Nickel base alloy comprising (in wt%) 8.0% Cobalt (Co), 8.0% Iron (Fe), 1.5% Molybdenum (Mo), 2.5% Tungsten (W), 10.0% Chromium (Cr), 5.4% Aluminum (Al), 8.6% Tantalum (Ta), 0.1% Hafnium (Hf), 0.1% Silicon (Si), 0.015% Carbon (C).

Nickel base alloy comprising (in wt%) 7.0% to 9.0% Cobalt (Co), 7.0% to 9.0% Iron (Fe), 1.2% to 1.8% Molybdenum (Mo), 2.2% to 2.8% Tungsten (W), 9.0% to 10.0% Chromium (Cr), 5.1% to 5.5% Aluminum (Al), 8.0% to 9.0% Tantalum (Ta), 1.2% to 1.5% Hafnium (Hf), 0.005% to 0.02% Silicon (Si), 0.04% to 0.1% Carbon (C), 0.005 to 0.03% Zirconium (Zr), 0.005 to 0.02% Boron (B).

Nickel base alloy comprising (in wt%) 8.0% Cobalt (Co), 8.0% Iron (Fe), 1.5% Molybdenum (Mo), 2.5% Tungsten (W), 9.5% Chromium (Cr), 5.2% Aluminum (Al), 8.5% Tantalum (Ta), 1.4% Hafnium (Hf), 0.01% Silicon (Si), 0.07% Carbon (C), 0.01% Zirconium (Zr), 0.015% Boron (B).

### References

[Barrett] "C. A. Barrett A Statistical Analysis of Elevated Temperature Gravimetric Cyclic Oxidation Data of 36 Ni- and Co-base Superalloys based on an Oxidation Attack Parameter NASA^{™} 105934" teaches that the ability to withstand oxidation at 1000°C and above depends on formation of a protective Al2O3 layer and that this ability is provided by Al, enhanced by Cr and Ta, somewhat reduced by Mo and W, reduced by Ti and Nb, and significantly reduced by V. This study did not include Fe.

[Caron] "P. Caron et al. Improvement of the Cyclic Oxidation Behaviour of Uncoated Nickel Based Single Crystal Superalloys Materials; Proceedings 'Materials for Advanced Power Engineering 1994'" teaches the beneficial RE effects when small levels of Hf and Si are combined.

[Goldschmidt] "D. Goldschmidt Single-Crystal Blades Proc. from Materials for Advanced Power Engineering 1994, Part I, p. 661-6741" teaches that the hot corrosion resistance of the alloy SC16 with 16 wt % Cr and 3 wt % Mo is inferior to that of IN738LC with 16 wt % Cr and 1.8 wt % Mo. IN738LC is generally recognized as having a high hot corrosion resistance. Hence a restriction to at most 2 wt % Mo in a new alloy seems prudent.

[Hasselqvist] "WO2024156439A1" contains the patent application covering Edge15 and Edge125 and teaches the beneficial effect of Si for formation of protective oxides.

[Moverare] "Thermomechanical Fatigue of Single-Crystal Superalloys: Influence of Composition and Microstructure; Proceedings, Superalloys2012" teaches the beneficial effect of Si on the TMF resistance in STAL15SX

[Pint] "B. A. Pint et al Effect of Cycle Frequency on High-Temperature Oxidation Behavior of Alumina- and Chromia-Forming Alloys; Oxidation of Metals, 58 (1/2), 73-101 (2002)" underlines the importance of S, and further teaches the beneficial RE effects when small levels of Hf and the rare earth Y are combined.

[Sarioglu] "C. Sarioglu, et al. The Control of Sulfur Content in Nickel-Base Single Crystal Superalloys and its Effect on Cyclic Oxidation Resistance Proceedings 'Superalloys 1996'" teaches that the scale adherence is severely reduced by tramp elements such as S, but, that this effect can be neutralized by a combination of clean casting and addition of small measured levels of reactive elements (RE) such as Zr, Hf and rare earths.

[Wu] "On the Compatibility of Nickel-Based Single Crystal Superalloys with Coating Systems; Proceedings '7th Parsons conference', 2007" teaches that the spallation life of a TBC can be correlated to the oxidation resistance of the base alloys. In particular, the lowest spallation life was obtained for the base alloy with the highest Ti content.

## Claims

1. Nickel base alloy,
comprising (in wt%):
6.0% to 10.0% Cobalt (Co),
6.0% to 10.0% Iron (Fe),
0.5% to 2.0% Molybdenum (Mo),
2.0% to 4.0% Tungsten (W),
9.0% to 11.0% Chromium (Cr),
5.0% to 6.0% Aluminum (Al),
7.0% to 11.0% Tantalum (Ta),
0.05% to 1.5% Hafnium (Hf),
0.005% to 0.5% Silicon (Si),
0.01% to 0.1% Carbon (C),
up to 0.03% Zirconium (Zr),
up to 0.03% Boron (B), and
optionally
up to 0.1% of the sum of the rare earths Yttrium (Y), Scandium (Sc), the Lanthanides and the Actinides; Nickel
especially remainder Nickel (Ni).

2. Nickel base alloy according to claim 1,
comprising (in wt%)
7.0% to 9.0% Cobalt (Co),
7.0% to 9.0% Iron (Fe),
1.2% to 1.8% Molybdenum (Mo),
2.2% to 2.8% Tungsten (W),
9.5% to 10.5% Chromium (Cr),
5.2% to 5.7% Aluminum (Al),
8.0% to 10.0% Tantalum (Ta),
0.05% to 0.15% Hafnium (Hf),
0.005% to 0.15% Silicon (Si),
0.02% to 0.1% Carbon (C),
0.005 to 0.03% Zirconium (Zr),
0.005 to 0.02% Boron (B).

3. Nickel base alloy according to claim 2,
comprising (in wt%)
8.0% Cobalt (Co),
8.0% Iron (Fe),
1.5% Molybdenum (Mo),
2.5% Tungsten (W),
10.0% Chromium (Cr),
5.5% Aluminum (Al),
9.0% Tantalum (Ta),
0.1% Hafnium (Hf),
0.01% Silicon (Si),
0.07% Carbon (C),
0.01% Zirconium (Zr),
0.015% Boron (B).

4. Nickel base alloy according to claim 2,
comprising (in wt%)
8.0% Cobalt (Co),
8.0% Iron (Fe),
1.5% Molybdenum (Mo),
2.5% Tungsten (W),
10.0% Chromium (Cr),
5.4% Aluminum (Al),
8.6% Tantalum (Ta),
0.1% Hafnium (Hf),
0.1% Silicon (Si),
0.03% Carbon (C),
0.01% Zirconium (Zr),
0.005% Boron (B).

5. Nickel base alloy according to claim 1,
comprising (in wt%)
7.0% to 9.0% Cobalt (Co),
7.0% to 9.0% Iron (Fe),
1.2% to 1.8% Molybdenum (Mo),
2.2% to 2.8% Tungsten (W),
9.5% to 10.5% Chromium (Cr),
5.2% to 5.7% Aluminum (Al),
8.0% to 10.0% Tantalum (Ta),
0.05% to 0.15% Hafnium (Hf),
0.05% to 0.5% Silicon (Si),
0.005% to 0.03% Carbon (C).

6. Nickel base alloy according to claim 5,
comprising (in wt%)
8.0% Cobalt (Co),
8.0% Iron (Fe),
1.5% Molybdenum (Mo),
2.5% Tungsten (W),
10.0% Chromium (Cr),
5.4% Aluminum (Al),
8.6% Tantalum (Ta),
0.1% Hafnium (Hf),
0.1% Silicon (Si),
0.015% Carbon (C).

7. Nickel base alloy according to claim 1,
comprising (in wt%)
7.0% to 9.0% Cobalt (Co),
7.0% to 9.0% Iron (Fe),
1.2% to 1.8% Molybdenum (Mo),
2.2% to 2.8% Tungsten (W),
9.0% to 10.0% Chromium (Cr),
5.1% to 5.5% Aluminum (Al),
8.0% to 9.0% Tantalum (Ta),
1.2% to 1.5% Hafnium (Hf),
0.005% to 0.02% Silicon (Si),
0.04% to 0.1% Carbon (C),
0.005 to 0.03% Zirconium (Zr),
0.005 to 0.02% Boron (B).

8. Nickel base alloy according to claim 7
comprising (in wt%)
8.0% Cobalt (Co),
8.0% Iron (Fe),
1.5% Molybdenum (Mo),
2.5% Tungsten (W),
9.5% Chromium (Cr),
5.2% Aluminum (Al),
8.5% Tantalum (Ta),
1.4% Hafnium (Hf),
0.01% Silicon (Si),
0.07% Carbon (C),
0.01% Zirconium (Zr),
0.015% Boron (B).

9. Alloy according to any of the preceding claims, comprising no Rhenium (Re) or Ruthenium (Ru).

10. Alloy according to any of the preceding claims, comprising no Niobium (Nb).

11. Alloy according to any of the preceding claims, comprising no Titanium (Ti).

12. Alloy according to any of the claims 1, 5, 6, comprising no Boron (B).

13. Alloy according to any of the claims 1, 5, 6, comprising no Zirconium (Zr).

14. Alloy according to any of the preceding claims, with between 0.002wt% and 0.05wt% Yttrium (Y).

15. Powder
comprising particles made of the alloy according to any of the previous claims,
optionally
comprising binder for binder jet printing
or
abrasive particles for seals.

16. Component made of an alloy or powder according to any of the previous claims 1 to 15.

17. Component according to claim 16,
which is additively manufactured.

18. Component according to claim 16,
which is cast using an alloy according to any of the previous claims 1 to 14.

19. Component according to claim 18,
which is cast in CC structure,
especially using an alloy according to claims 1 to 3.

20. Component according to claim 18,
which is cast directionally solidified,
especially using an alloy of claims 1, 7 or 8,
very especially cast in a single crystal structure especially using an alloy of claims 1, 4, 5 or 6.

21. Method to produce a component by casting using an alloy according to any of the previous claims 1 to 14.

22. Method to produce a component by additive manufacturing using an alloy or powder according to any of the previous claims 1 to 15.
